# DEMANDE DE BREVET EUROPEEN

(11) **EP 0 931 967 A2**
(43) Date de publication de la demande: **28.07.1999**
(21) Numéro de dépôt: 98420229.1
(22) Date de dépôt: 10.12.1998
(51) Int. Cl.: F16L 19/02

(54) **Raccord à souder perfectionné**

(30) Priorité: 21.01.1998 FR 9800812
(71) Demandeur: Société de Diffusion de Materiel Europeen, 69630 Chaponost (FR)
(72) Inventeur: Conchon, Michel, 69630 Chaponost (FR)
(74) Mandataire: Vuillermoz, Bruno

(57) **Abrégé**

Ce raccord à souder perfectionné comprend :
- une première pièce à souder (1), munie d'un filetage externe (2) et pourvue au voisinage de sa face d'appui (6) :
   - d'une gorge annulaire (8) destinée à recevoir un joint de raccord plan (5) ;
   - à la périphérie de cette gorge (8), d'une lèvre (9) en débordement extérieur, située dans un plan supérieur par rapport à la paroi interne (10) définissant ladite gorge ;
- une seconde pièce à souder ou collet (3), pourvu d'une portée circulaire (11) coaxiale avec ladite première pièce (1),
- un écrou (4), comprenant un épaulement annulaire (12) destiné à coopérer avec ladite seconde pièce (3), et muni d'un filetage interne, dont le pas et les dimensions correspondent au filetage externe (2) de ladite première pièce (1), de telle sorte à assurer l'accouplement de la première pièce sur la seconde par l'intermédiaire respectivement de la face d'appui (6), et plus précisément de la lèvre (9) et du joint (5) de la première pièce et de la face avant (7) de la seconde pièce, ladite lèvre (9) venant au contact de la face avant (7) lorsque l'accouplement est réalisé.

L'enveloppe externe du joint (5) est conique, de telle sorte à ce que lorsque l'accouplement des pièces (1, 3) est réalisé, ce dernier vient occuper le volume défini entre la gorge (8) et l'espace lui-même défini par la lèvre externe (9) de ladite première pièce (1) et la face avant (7) de ladite seconde pièce (3), sans engendrer d'écrasement ni de débordement du joint à l'intérieur de l'alésage défini par les dites pièces ainsi accouplées.

## Description

L'invention concerne un raccord à souder perfectionné

Bien que destiné à être mis en oeuvre dès lors qu'il convient de procéder au raccordement de deux canalisations ou tubulures entre elles et notamment de deux tuyauteries, l'invention trouve tout particulièrement son application dans l'industrie agro-alimentaire, pharmaceutique, cosmétologique, chimique et de manière générale toute industrie nécessitant des conditions d'environnement aseptique.

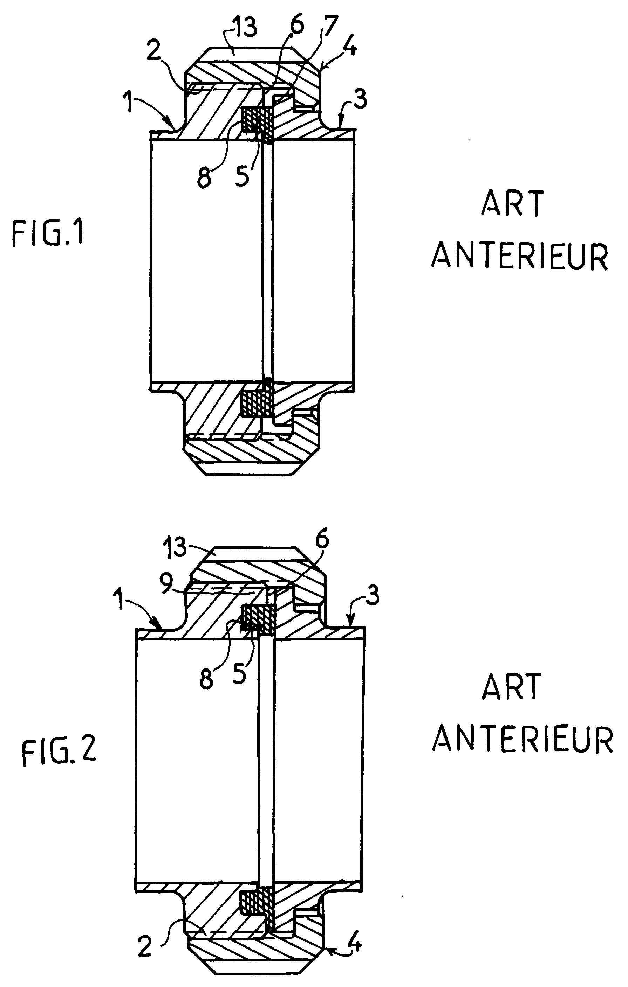

Afin de permettre le raccordement de telles tuyauteries, il est connu d'utiliser des raccords, du type par exemple commercialisés sous la référence SMS tel qu'illustré en Figure 1. Un tel raccord comporte une première pièce à souder (1), présentant un filetage externe (2,) un collet ou pièce à souder (3) et, un écrou (4), le plus souvent cannelé afin de faciliter sa préhension, et destiné à accoupler entre elles les deux pièces (1) et (3). La pièce (1) est munie sur sa face d'appui (6) d'un joint de raccord (5), profilé en L, et destiné à assurer l'étanchéité par écrasement entre la face d'appui (6) de la pièce (1) et la face avant (7) du collet (3). Le joint (5) est reçu dans une gorge annulaire (8) autorisant le centrage et l'engagement du joint, la face d'appui (6) de ladite première pièce (1) étant rectiligne et le plan qu'elle définit comportant l'extrémité de la paroi définissant la gorge annulaire (8). Ce plan est perpendiculaire à l'axe longitudinal du raccord, et plus généralement à l'axe de révolution des pièces.

Dans ce type de raccord de l'art antérieur, la face d'appui (6) et la face avant (7) ne viennent jamais en contact l'une l'autre, le serrage maximum de l'écrou (4) venant en effet écraser le joint (5), et provoque la saillie ou le débouchage d'une partie dudit joint à l'intérieur de la voie définie par les pièces (1) et (3), cette saillie ou débouchage étant inhérent à la déformation du joint. Outre la détérioration rapide du joint provenant de son écrasement répété, et susceptible donc d'induire des fuites, la saillie du joint à l'intérieur de la voie ou de l'alésage s'avère rédhibitoire d'un point de vue aseptique.

Une autre solution plus récente, par exemple décrite dans le document FR A 2 642 138 et représentée en section transversale au sein de la Figure 2, a proposé de ménager une lèvre périphérique (9) au niveau de la première pièce (1), située dans un plan supérieur par rapport au plan définissant la gorge annulaire (8) recevant le joint (5). Cette différence de plans ainsi ménagée au niveau de la face d'appui (6) de la première pièce à souder permet de faire prendre appui ladite face (6) contre la face avant (7) de ladite deuxième pièce (3), dimensionnée plus largement à cet effet, de telle sorte à ainsi éviter l'écrasement du joint, et partant de drastiquement limiter sa détérioration, et par voie de conséquence les fuites susceptibles d'en résulter. Pour autant, on ne s'affranchit pas avec cette solution, en tous cas de manière satisfaisante, d'une déformation partielle du joint, conduisant ce dernier à se déformer et à déboucher à l'intérieur de l'alésage du raccord ainsi constitué. De fait, on ne satisfait toujours pas les conditions requises d'asepsie.

Par ailleurs, le centrage des deux pièces l'une par rapport à l'autre n'est pas optimale, dans la mesure où il n'est assuré que par le filetage de l'écrou. Eu égard à la nécessité de l'existence d'un jeu, même réduit, pour pouvoir visser ou dévisser cet écrou, on ne peut aboutir à un centrage précis desdites pièces, ce qui nuit à la continuité de la tuyauterie ainsi réalisée.

L'objet de l'invention est donc de s'affranchir de l'ensemble de ces inconvénients.

Celle-ci propose un raccord à souder perfectionné comprenant :
- une première pièce à souder, munie d'un filetage externe et pourvue au voisinage de sa face d'appui :
   - d'une gorge annulaire destinée à recevoir un joint de raccord plan :
   - à la périphérie de cette gorge, d'une lèvre en débordement extérieur, située dans un plan supérieur par rapport à la paroi interne définissant ladite gorge ;
- une seconde pièce à souder ou collet, pourvu d'une portée circulaire coaxiale avec ladite première pièce,
- un écrou, comprenant un épaulement annulaire destiné à coopérer avec ladite seconde pièce, et muni d'un filetage interne, dont le pas et les dimensions correspondent au filetage externe de ladite première pièce, de telle sorte à assurer l'accouplement de la première pièce sur la seconde par l'intermédiaire respectivement de la face d'appui, et plus précisément de la lèvre et du joint de ladite première pièce et de la face avant de la seconde pièce, ladite lèvre venant au contact de la face avant lorsque l'accouplement est réalisé.

L'invention se caractérise en ce que l'enveloppe externe du joint est conique, de telle sorte à ce que lorsque l'accouplement des pièces est réalisé, ce dernier vient occuper le volume défini entre la gorge et l'espace lui-même défini par la lèvre externe et la face avant, sans engendrer d'écrasement ni de débordement du joint à l'intérieur de l'alésage.

Par ce biais, on s'affranchit donc de tous risques de nids et autres sources de stockage d'impuretés, et plus généralement de sources septiques, rédhibitoires dans un grand nombre d'applications telles que mentionnées en préambule.

En outre, selon une autre caractéristique de l'invention, ladite première pièce présente une jupe, de diamètre externe supérieur au diamètre du filetage dont elle est pourvue, destinée à coopérer avec la paroi interne lisse ménagée au niveau de l'une des extrémités de l'écrou dans le prolongement du filetage dont il est lui-même pourvu. De la sorte, on munit cette première pièce d'une véritable zone de centrage, au niveau de laquelle deux parois lissent coopèrent l'une avec l'autre indépendamment de tout jeu, de telle sorte à aboutir à un véritable centrage de ladite pièce avec ladite seconde pièce.

La manière de réaliser l'invention et les avantages qui en découlent ressortiront mieux de l'exemple de réalisation qui suit donné à titre indicatif et non limitatif à l'appui des figures annexées.
Les Figures 1 et 2 sont, comme déjà dit, des représentations schématiques en section de dispositifs de l'art antérieur.
La Figure 3 est une représentation schématique en section du dispositif conforme à l'invention avant serrage
La Figure 4 est une vue analogue à la figure 3, mais après serrage.
La figure 5 est une représentation schématique en section du joint conforme à l'invention.
La Figure 6 est une représentation schématique en perspective éclatée du raccord de l'invention.

Les références numériques déjà indiquées en liaison avec les Figures 1 et 2 sont conservées dans la suite de la description.

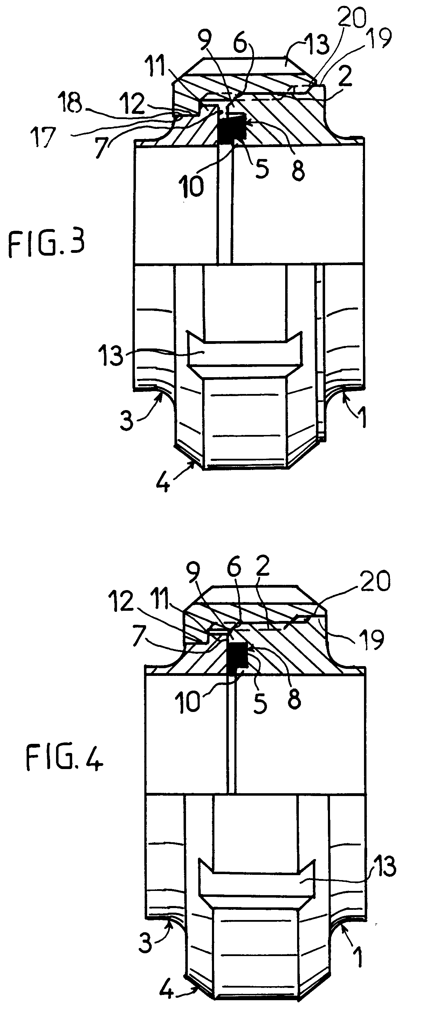

On a donc représenté sur la Figure3 le raccord conforme à l'invention, avant serrage. On peut y distinguer une première pièce à souder (1), munie d'un filetage périphérique (2). Cette pièce comporte au niveau de sa face d'appui (6), outre un joint (5) reçu dans une gorge (8), également une lèvre périphérique en débordement (9), dont on observe que le plan au niveau duquel elle affleure est décalé par rapport au plan d'affleurement de la paroi (10), définissant ladite gorge (8).

De la même manière, la seconde pièce (3) ou collet du raccord conforme à l'invention vient prendre appui par le biais d'une portée (11) contre un épaulement annulaire (12), ménagé au niveau de l'alésage interne de l'écrou (4). Celui-ci est avantageusement muni de cannelures (13), afin de faciliter la préhension, et plus particulièrement la rotation et le serrage de l'écrou.

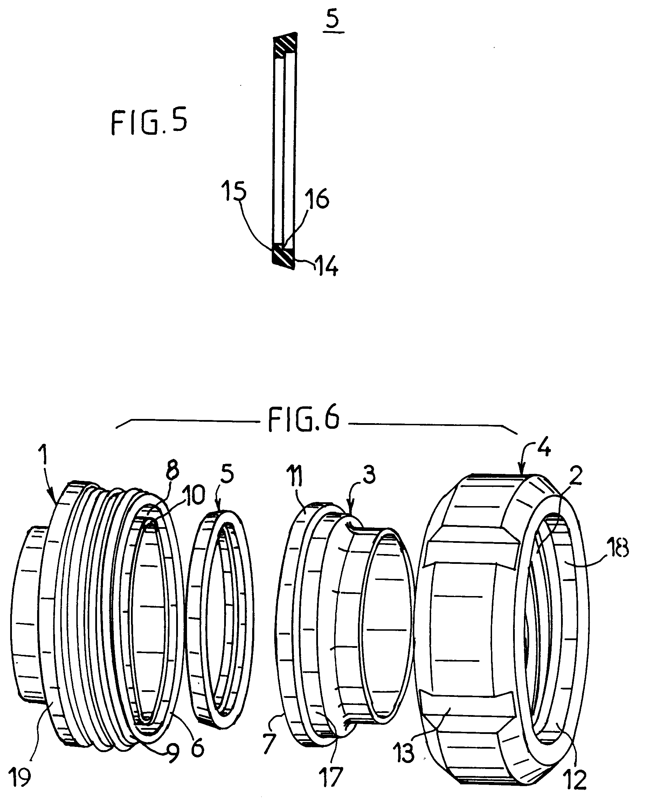

Selon l'une des caractéristiques de l'invention, le joint (5), que l'on a mieux représentée sur la Figure 5, présente une enveloppe externe conique, ainsi que l'on peut bien l'observer, la conicité étant typiquement d'un angle moyen de 15° par rapport à l'axe de révolution du cône. En outre, et selon l'invention, ce joint conique présente au niveau de sa base de plus petit diamètre (15), un débordement annulaire (16), destiné, ainsi que l'on peut bien l'observer sur la Figure 4, à combler l'espace laissé libre entre l'extrémité supérieure de la paroi (10) et la face d'appui (7) du collet (3) lorsque ces deux pièces sont accouplées. Cette distance correspond en fait à la différence d'écartement entre les plans contenant respectivement l'extrémité supérieure de la lèvre (9) et de la paroi (10).

De la sorte, et ainsi que matérialisé sur la Figure 4, l'accouplement des deux pièces (1) et (3) entre elles au moyen de l'écrou (4), après blocage maximum c'est-à-dire lorsque la lèvre (9) vient prendre appui contre la face avant (7) du collet (3), induit la déformation partielle du joint (5), qui vient alors occuper sensiblement l'intégralité du volume défini par la gorge (8), la lèvre (9) et la face avant (7). Pour autant, il ne débouche pas à l'intérieur de l'alésage défini par les deux pièces (1) et (3).

Ce faisant, outre l'absence d'écrasement du joint conduisant à son altération, on aboutit également à l'absence de tout débouchage du joint à l'intérieur de la voie et partant, la suppression de tous nids ou sources septiques, susceptibles de nuire aux applications de ce raccord.

Selon une autre caractéristique de l'invention, ladite première pièce (1) est doublement centrée par rapport au collet (3). Tout d'abord, et s'agissant de cette dernière, on peut observer, notamment sur les figures 2 et 3, que la lèvre (11) se prolonge ensuite par une portée cylindrique (17), lisse, destinée à coopérer avec la paroi interne lisse (18) de l'épaulement (12). Les longueurs relatives de coopération assurent un centrage précis du collet (3).

De manière analogue, ladite première pièce (1) présente une jupe (19), de diamètre externe supérieur au diamètre du filetage (2) dont elle est pourvue, de paroi lisse, c'est à dire exempte de tout filetage ou relief similaire. Cette jupe (19) est destinée à coopérer avec la paroi interne lisse (20) ménagée au niveau de l'une des extrémités de l'écrou (4) dans le prolongement du filetage dont il est lui-même pourvu, cette paroi interne (20) correspondant au diamètre externe de la jupe (19).

Tout comme pour le collet, les longueurs relatives de coopération entre l'écrou et la première pièce (1) assurent un centrage précis de celle-ci, centrage bien entendu coaxiale avec le collet (3), et inhérent à la symétrie de révolution de l'écrou (4).

Compte tenu du centrage imparfait induit par la coopération respective des filetages entre eux associé à un centrage précis inhérent à la coopération jupe - paroi interne lisse de l'écrou, on aboutit de la sorte à un véritable centrage de ladite première pièce avec ladite seconde pièce ou collet, et partant à une continuité rigoureuse de la tuyauterie ainsi réalisée.

Par ailleurs, de par les moyens mis en oeuvre, le désaccouplement des dites pièces, par exemple pour pourvoir au remplacement du joint, ne nécessite qu'une simple traction dans une direction perpendiculaire à l'axe de la tuyauterie de l'une desdites pièces par rapport à l'autre après dévissage de l'écrou, alors que dans les dispositifs de l'art antérieur, compte tenu de la nécessité de réaliser un emboîtage de l'une des pièces dans l'autre, afin d'aboutir à un centrage le moins médiocre possible, un tel déaccouplement n'est pas possible, sauf à démonter toute la tuyauterie. On imagine aisément la perte de temps.

On conçoit de fait tout l'intérêt d'un tel raccord, notamment dans les domaines techniques dans lesquels une asepsie rigoureuse est recherchée.

## Revendications

1. Raccord à souder perfectionné, comprenant :
- une première pièce à souder (1), munie d'un filetage externe (2) et pourvue au voisinage de sa face d'appui (6) :
• d'une gorge annulaire (8) destinée à recevoir un joint de raccord plan (5) ;
• à la périphérie de cette gorge (8), d'une lèvre (9) en débordement extérieur, située dans un plan supérieur par rapport à la paroi interne (10) définissant ladite gorge ;
- une seconde pièce à souder ou collet (3), pourvu d'une portée circulaire (11) coaxiale avec ladite première pièce (1),
- un écrou (4), comprenant un épaulement annulaire (12) destiné à coopérer avec ladite seconde pièce (3), et muni d'un filetage interne, dont le pas et les dimensions correspondent au filetage externe (2) de ladite première pièce (1), de telle sorte à assurer l'accouplement de la première pièce sur la seconde par l'intermédiaire respectivement de la face d'appui (6), et plus précisément de la lèvre (9) et du joint (5) de la première pièce et de la face avant (7) de la seconde pièce, ladite lèvre (9) venant au contact de la face avant (7) lorsque l'accouplement est réalisé,
***caractérisé*** en ce que l'enveloppe externe du joint (5) est conique, de telle sorte à ce que lorsque l'accouplement des pièces (1, 3) est réalisé, ce dernier vient occuper le volume défini entre la gorge (8) et l'espace lui-même défini par la lèvre externe (9) de ladite première pièce (1) et la face avant (7) de ladite seconde pièce (3), sans engendrer d'écrasement ni de débordement du joint à l'intérieur de l'alésage défini par les dites pièces ainsi accouplées.

2. Raccord à souder perfectionné selon la revendication 1, ***caractérisé*** en ce que ladite première pièce (1) présente une jupe (19), de paroi externe lisse, et de diamètre externe supérieur au diamètre du filetage (2) dont elle est pourvue, destinée à coopérer avec la paroi interne lisse (20) ménagée au niveau de l'une des extrémités de l'écrou (4) dans le prolongement du filetage dont il est lui-même pourvu, cette paroi interne (20) correspondant au diamètre externe de la jupe (19).
